# EUROPÄISCHE PATENTSCHRIFT

(11) **EP 4 229 364 B1**
(45) Veröffentlichungstag und Bekanntmachung des Hinweises auf die Patenterteilung: **07.05.2025**
(21) Anmeldenummer: 21777675.6
(22) Anmeldetag: 13.09.2021
(51) Int. Cl.: G01F 1/84

(54) **MODULARES MESSGERÄT**
MODULAR MEASURING DEVICE
DISPOSITIF DE MESURE MODULAIRE

(30) Priorität: 16.10.2020 DE 102020127356
(43) Veröffentlichungstag der Anmeldung: 23.08.2023
(73) Patentinhaber: Endress+Hauser Flowtec AG, 4153 Reinach (CH)
(72) Erfinder: SCHÜTZE, Christian, 4055 Basel (CH); SCHWENTER, Benjamin, 4226 Breitenbach (CH); WERNER, Marc, 79639 Grenzach-Wyhlen (DE)
(74) Vertreter: Endress + Hauser Group Services (Deutschland) AG+Co. KG
(86) Internationale Anmeldenummer: PCT/EP2021/075128
(87) Internationale Veröffentlichungsnummer: WO 2022/078685

(56) Entgegenhaltungen:
- WO-A1-2020/035305
- US-A- 5 663 509

## Beschreibung

Die Erfindung betrifft ein modulares Messgerät zum Erfassen eines Massedurchflusses, einer Viskosität, einer Dichte und/oder einer davon abgeleiteten Größe eines fließfähigen Mediums, insbesondere ein modular ausgebildetes Coriolis-Durchflussmessgerät für bevorzugt pharmazeutische Bioprozessanwendungen.

Feldgeräte der Prozessmesstechnik mit einem Messaufnehmer des Vibrationstypen und besonders Coriolis-Durchflussmessgeräte sind seit vielen Jahren bekannt. Der grundsätzliche Aufbau eines solchen Messgerätes wird beispielsweise in der EP 1 807 681 A1 beschrieben, wobei auf den Aufbau eines gattungsgemäßen Feldgeräts im Rahmen der vorliegenden Erfindung auf diese Druckschrift vollumfänglich Bezug genommen wird.

Typischerweise weisen Coriolis-Durchflussmessgeräte ein oder mehrere schwingfähige Messrohre auf, welche mittels eines Schwingungserregers in Schwingung versetzt werden. Diese Schwingungen übertragen sich über die Rohrlänge und werden durch die Art des im Messrohr befindlichen fließfähigen Mediums und dessen Durchflussgeschwindigkeit variiert. Ein Schwingungssensor oder insbesondere zwei voneinander beabstandete Schwingungssensoren können an einer anderen Stelle des Messrohres die variierten Schwingungen in Form eines Messsignals oder mehrerer Messsignale aufnehmen. Aus dem oder den Messsignalen kann eine Auswerteeinheit sodann den Massedurchfluss, die Viskosität und/oder die Dichte des Mediums ermitteln. Die schwingfähigen Messrohre sind üblicherweise über Verteilerstücke mit Prozessanschlüssen und Gehäuse stoffschlüssig verbunden.

Es sind Coriolis-Durchflussmessgeräte mit austauschbaren Einweg-Messrohranordnungen mit einer modularen Bauweise bekannt, bei denen keine stoffschlüssige Verbindungen zwischen Messrohre und Gehäuse vorgesehene sind, um somit einen Austausch des Messrohres zu gewährleisten. So wird beispielsweise in der WO 2011/099989 A1 ein Verfahren zur Herstellung einer monolithisch ausgebildeten Messrohranordnung eines Coriolis-Durchflussmessgerätes mit gebogenen Messrohren gelehrt, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt - ebenso wie die US 10,209,113 B2 - eine Fixierkörperanordnung, welche dazu eingerichtet ist ein auswechselbares Messrohrmodul, umfassend dünnwandige Kunststoffrohre, aufzunehmen und zu stützen. Die Befestigung der Messrohrmodule in einem mit den notwendigen Erregern und Sensoren ausgestatteten Trägermodul erfolgt über die Fixierkörperanordnung.

Die WO 2020/035305 A1 offenbart ein modulares Coriolis-Durchflussmessgerät, welches einen Körper mit einem Fluidkanal aufweist, der über Halteelemente zum lösbaren Befestigen mit Prozessanschlüsse verbindbar ist.

Die mechanischen Eigenschaften der, für Coriolis-Durchflussmessgeräte geeigneten Messrohrmodule können stark variieren. Daher müssen spezifische Kenngrößen wie Kalibrationsfaktor und Nullpunkt vor dem Einsatz in einem Coriolis-Durchflussmessgerät ermittelt werden. Es hat sich herausgestellt, dass der im Justierverfahren bestimmte Nullpunkt in der Regel von dem tatsächlichen Nullpunkt des austauschbaren Messrohrmoduls im Einsatz abweicht. Eine derartige Abweichung lässt sich nur schwer vorhersagen. Ein Grund dafür ist der nur äußerst schwer zu reproduzierende Grad der Befestigung des Messrohrmoduls in dem Trägermodul. Ein weiterer Einfluss sind Mikroreibungen zwischen Messrohr- und Trägermodul.

Der Erfindung liegt die Aufgabe zugrunde ein anwenderfreundlich zusammensetzbares, modulares Messgerät bereitzustellen, dessen Nullpunkt im Einsatz nur minimal vom im Justierverfahren ermittelten Nullpunkt abweicht.

Die Aufgabe wird gelöst durch das modulare Messgerät nach Anspruch 1.

Das erfindungsgemäße modulare Messgerät zum Erfassen eines Massedurchflusses, einer Viskosität, einer Dichte und/oder einer davon abgeleiteten Größe eines fließfähigen Mediums, insbesondere ein modular ausgebildetes Coriolis-Durchflussmessgerät für bevorzugt pharmazeutische Bioprozessanwendungen, umfasst:
- ein, insbesondere als Einwegartikel ausgebildetes Messrohrmodul
   wobei das Messrohrmodul mindestens ein, von einem Medium durchströmbares Messrohr umfasst,
   wobei das Messrohrmodul eine, an dem mindestens einen Messrohr befestigte Fixierkörperanordnung aufweist;
- einen Schwingungserreger welcher dazu eingerichtet ist, das Messrohr zu Schwingungen anzuregen, insbesondere umfassend einen Erregermagneten und eine Erregerspule
   wobei zumindest eine Komponente des Schwingungserregers insbesondere der Erregermagnet an dem Messrohrmodul angeordnet ist;
- mindestens einen Schwingungssensor, welcher dazu eingerichtet ist, die Schwingungen des mindestens einen Messrohres zu erfassen, insbesondere umfassend einen Sensormagneten und eine Sensorspule
   wobei zumindest eine Komponente des Schwingungssensors insbesondere der Sensormagnet an dem Messrohrmodul angebracht ist;
- ein Trägermodul insbesondere umfassend eine Aufnahme die Sensorspule und die Erregerspule
   wobei das Messrohrmodul in die Aufnahme des Trägermoduls anordenbar ist,
   wobei das Trägermodul eine Fixiervorrichtung aufweist,
   wobei die Fixiervorrichtung eine zumindest abschnittsweise exzentrisch ausgebildete Welle aufweist,
   wobei die Welle dazu eingerichtet ist, das Messrohrmodul über die Fixierkörperanordnung in der Aufnahme zu verspannen und mit dem Trägermodul mechanisch lösbar zu verbinden,
   dadurch gekennzeichnet, dass die Welle als eine am Trägermodul gelagerte Nockenwelle, mit mindestens einer Nocke ausgebildet ist.

Bisher bekannte Fixiervorrichtungen haben den Nachteil, dass sie zum einen das Messrohrmodul nicht ausreichend gegen äußere Störungen und Mikroreibungen schützt und zum anderen der Befestigungsgrad nicht reproduzierbar ist, so dass in den meisten Fällen nach dem Befestigen des Messrohrmoduls im Trägermodul der tatsächlich vorliegende Nullpunkt von dem im Justierverfahren ermittelten Nullpunkt abweicht.

Eine Welle ist ein länglicher, insbesondere zylinderförmiger und rotierender Körper, welcher zur Übertragung von Drehbewegungen und Drehmomenten dient. Sie wird in der Regel durch wenigstens ein Drehlager am Trägermodul unterstützt. Bei der Übertragung von Drehmomenten wird die Welle auf Torsion beansprucht. Der exzentrisch ausgebildete Teil der Welle drückt gegen die Fixierkörperanordnung und spannt diese somit in der Aufnahme ein.

Unter der mechanisch lösbaren Verbindung des Messrohrmoduls an dem Trägermodul ist im Zusammenhang der Erfindung ein austauschbares Verbindung zu verstehen, bei dem keine stoffschlüssige Verbindungen gelöst werden müssen. Es ist besonders anwenderfreundlich, wenn für das mechanisch lösbare Verbinden des Messrohrmoduls keine zusätzlichen mechanischen Werkzeuge - wie Schraubendreher - notwendig sind.

Eine Nockenwelle ist ein stabförmiger Körper - gleichzusetzen mit einer Welle -, auf dem mindestens ein insbesondere gerundeter Vorsprung - die sogenannte Nocke - angebracht ist. Der stabförmige Körper dreht sich um die eigene Achse, durch den oder die auf ihr angebrachten Nocken wird diese Drehbewegung wiederholt in eine kurze Längsbewegung umgewandelt.

Beim Anregen des mindestens einen Messrohres wird auch die Fixierkörperanordnung in Schwingungen versetzt, da es mit dem mindestens einen Messrohr verbunden ist. Eine derartige Bewegung ist nachteilig für die Messperformance. Das Fixieren mittels einer Nockenwelle unterdrückt die Schwingungen. Die Nocke der Nockenwelle drückt die Fixierkörperanordnung in Richtung der Aufnahme und verspannt diese in der Aufnahmevorrichtung. Somit werden Bewegungen des Messrohrmoduls in der Aufnahme unterbunden.

Vorteilhafte Ausgestaltung der Erfindung sind Gegenstand der Unteransprüche.

Eine Ausgestaltung sieht vor, dass die Fixierkörperanordnung eine Vertiefung aufweist, die zumindest teilweise komplementär zum exzentrischen Abschnitt der Welle, insbesondere zur mindestens einen Nocke ausgebildet ist,
wobei die Vertiefung dazu ausgebildet ist, mit dem exzentrischen Abschnitt der Welle, insbesondere mit der mindestens einen Nocke eine zumindest formschlüssige Verbindung zu bilden.

Eine Vertiefung in der Fixierkörperanordnung hat den Vorteil, dass sichergestellt werden kann, ob eine ordnungsgemäße Anordnung des Messrohrmoduls und/oder der Welle erfolgt ist. Erst wenn sich der exzentrische Abschnitt der Welle bzw. die Nocke formschlüssig in die Vertiefung einsetzen lässt, befinden sich Messrohrmodul und Trägermodul relativ zueinander in einer Sollposition und eine durch eine fehlerhafte Anordnung und/oder Fixierung des Messrohrmoduls bedingte Abweichung des Nullpunktes kann vermieden werden.

Eine Ausgestaltung sieht vor, dass die Fixierkörperanordnung insbesondere die Welle und bevorzugt die Nockenwelle in eine Längsrichtung beweglich gelagert ist.

Eine derartige Ausgestaltung ermöglicht ein handliches Bedienen der Fixiervorrichtung und ein bedienerfreundliches Auswechseln des Messrohrmoduls mit einer sehr guten Reproduzierbarkeit der kraft- und/oder formschlüssigen Verbindung. Der Anwender bewegt die Welle bzw. die Nockenwelle in Längsrichtung ebendieser und legt somit die Aufnahme frei, so dass das Messrohrmodul einsetzbar ist. Zum Fixieren des Messrohrmoduls wird die Welle bzw. die Nockenwelle wieder in die Verschließposition bewegt und rotiert, um das Messrohrmodul in der Aufnahme zu verspannen.

Eine Ausgestaltung sieht vor, dass die Fixiervorrichtung, insbesondere die Welle derart ausgebildet ist, dass eine Bewegung in eine Längsrichtung zumindest abschnittsweise ausschließlich in einer diskreten Anzahl an Orientierungen, insbesondere in genau einer Orientierung und vorzugsweise in genau zwei Orientierung der Fixiervorrichtung, insbesondere der Welle und bevorzugt der Nockenwelle möglich ist.

Daraus ergibt sich der Vorteil, dass beim Austauschen des Messrohrmoduls ein Herausfallen der Welle bzw. der Nockenwelle aus einem der Drehlager verhindert werden kann und ein reproduzierbareres Positionieren des exzentrischen Abschnittes bzw. der mindestens einen Nocke in eine vorgesehene Sollposition realisiert wird.

Die Erfindung wird anhand der nachfolgenden Figuren näher erläutert. Es zeigt:
Fig. 1: eine perspektivische Ansicht auf eine Ausgestaltung eines modular ausgebildeten Coriolis-Durchflussmessgerätes;
Fig. 2: in drei perspektivischen Ansichten das Fixieren eines Messrohrmoduls in einer Aufnahme eines Trägermoduls mittels einer erfindungsgemäßen Ausgestaltung der Fixiervorrichtung; und
Fig. 3: einen Querschnitt durch eine Ausgestaltung der Nockenwelle und einer Fixierkörperanordnung mit einer Vertiefung.

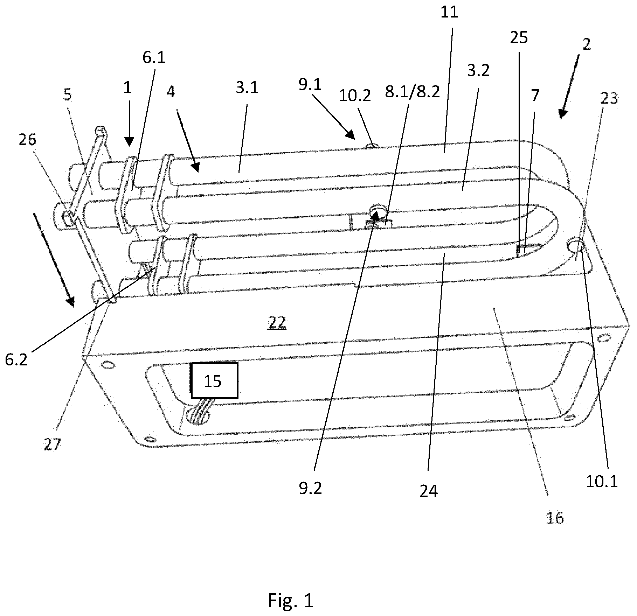

Die Fig. 1 zeigt eine perspektivische Darstellung eines Messgerätes für pharmazeutische Bioprozessanwendungen. Es handelt sich explizit um ein modular ausgebildetes Coriolis-Durchflussmessgerät. Das Messrohrmodul 4 ist dazu geeignet in ein Trägermodul 16 auswechselbar und mechanisch lösbar eingesetzt zu werden. Die mechanisch lösbare Verbindung erfolgt über eine am Trägermodul angeordnete Fixiervorrichtung (nicht abgebildet). Um ein einfaches Auswechseln des Messrohrmoduls 4 zu realisieren, sind nur einzelne Komponenten des Schwingungserregers 7 und der Schwingungssensoren 8.1, 8.2, in dem Fall die jeweiligen Magnetanordnungen 9.1, 9.2 an dem Messrohrmodul 4 angebracht. Diese benötigen keine elektrische Verbindung mit einer Mess- und/oder Betriebsschaltung 15. Die weiteren Komponenten des Schwingungserregers 7 und der Schwingungssensoren 8.1, 8.2 sind am Trägermodul 16, insbesondere in der Aufnahme 23 angeordnet, welche für das Aufnehmen des Messrohrmodul 4 geeignet und ausgebildet ist. Das Messrohrmodul 4 umfasst zwei gebogenen, parallel zueinander verlaufende Messrohre 3.1, 3.2, welche über eine Koppleranordnung 1, bestehend aus vier Kopplungselementen 6.1, 6.2, und über eine Fixierkörperanordnung 5 miteinander verbunden sind. Alternativ kann das Messrohrmodul 4 auch ausschließlich ein Messrohr 3.1, 3.2 oder mehr als zwei Messrohre 3.1, 3.2 umfassen. Zwei Kopplungselemente 6.1 sind in einem Einlauf und zwei Kopplungselemente 6.2 sind im Auslauf der jeweiligen Messrohre 3.1, 3.2 stoffschlüssig angebracht. Die Messrohre 3.1, 3.2 sind so geformt, dass die Strömungsrichtung, dargestellt durch zwei Pfeile, im Einlauf entgegengesetzt zur Strömungsrichtung in einem Auslauf orientiert ist. Im Einlauf und im Auslauf kann jeweils ein Strömungsteiler angeordnet, welcher einen Prozessanschluss aufweist zum Verbinden mit einem Schlauch- und/oder Kunststoffrohrsystem. Gemäß einer Ausgestaltung kann genau ein Strömungsteilerkörper statt zwei separate Strömungsteiler vorgesehen werden, welcher auf den Einlauf und Auslauf aufgeschoben wird und mit dazu beiträgt, das Messrohrmodul 4 nach dem Einbau in das Trägermodul 16 vor Störungen durch die Umgebung zu entkoppeln. Die einzelnen Kopplungselemente 6.1, 6.2 sind plattenförmig ausgebildet und sind ein- oder zweiteilig. Die Kopplungselemente 6.1, 6.2 können die Messrohre 3.1, 3.2 jeweils vollständig oder nur teilweise umgreifen. Die abgebildeten Messrohre 3.1, 3.2 sind U-förmig ausgebildet, d.h. sie weisen jeweils zwei im Wesentlichen parallel zueinander verlaufende Schenkel 11 auf, die über einen gebogenen Teilabschnitt verbunden sind. An jedem Messrohre 3.1, 3.2 ist jeweils genau eine Magnetanordnung 9.1, 9.2 angeordnet. Im gebogenen Teilabschnitt ist ein Magnet 10.1 der Magnetanordnung 9.1 angeordnet, welcher eine Komponente des Schwingungserregers 7 bildet. In den jeweiligen Schenkeln 11 ist jeweils ein Magnet 10.2 angebracht, welcher ein Teil des Schwingungssensors 8.1, 8.2 bildet. Die Magnete 10.1, 10.2 sind an Anbringflächen angebracht. Die Anbringflächen befinden sich in der Ausgestaltung an den jeweiligen Messrohren 3.1, 3.2. Alternativ kann das Messrohrmodul 4 auch ein oder mehr gerade Messrohre 3.1, 3.2 aufweisen bzw. kann die Form der Messrohre 3.1, 3.2 von der abgebildeten Form abweichen.

Das Messrohrmodul 4 ist teilweise in eine Aufnahme 23 eines Trägermoduls 16 eingeführt. Ein Pfeil deutet die Einführrichtung an. Die Einführrichtung verläuft gemäß der Ausgestaltung senkrecht zu einer Längsrichtung der Aufnahme 23. Die Aufnahme 23 kann auch derart ausgebildet sein, dass die Messrohranordnung 4 in Längsrichtung der Aufnahme 23 einzuführen ist (nicht abgebildet). Das Trägermodul 16 weist eine Mess- und/oder Betriebsschaltung 15 auf, welche mit den zwei Schwingungserregern 7 und insgesamt vier Schwingungssensoren 8.1, 8.2, insbesondere mit den jeweiligen Spulenvorrichtungen 25 verbunden und dazu eingerichtet sind ein zeitlich wechselndes Magnetfeld zu erzeugen und/oder zu erfassen. Das Trägermodul 16 weist einen Trägermodulkörper 22 auf, welcher die Aufnahme 23 begrenzt. Die Fixierkörperanordnung 5 des Messrohrmoduls 4 weist Montageflächen 26 auf, welche dazu dienen die Messrohrmodul 4 in eine vorgegebene Position in dem Trägermodul 16 anzuordnen. Gemäß der abgebildeten Ausgestaltung zeigt das Lot der Montagefläche 26 senkrecht zur Längsrichtung des Messrohrmoduls 4. Gemäß einer weiteren vorteilhaften Ausgestaltung zeigt das Lot der Montagefläche 26 in Richtung der Längsrichtung des Messrohrmoduls 4. Die mit der Montagefläche 26 der Fixierkörperanordnung 5 in Kontakt stehende Fläche des Trägermodulkörpers 22 ist als Auflagefläche 27 bezeichnet.

Das Trägermodul 16 weist zwei parallel zueinander orientierte Seitenflächen auf, welche die Aufnahme 23 quer zur Längsrichtung der Aufnahme 23 begrenzen. An bzw. in den Seitenflächen sind die Spulenvorrichtungen 25 der Schwingungssensoren 8.1, 8.2 und die Spulenvorrichtung 25 des Schwingungserregers 7 angeordnet. Die Spulenvorrichtungen 25 der Schwingungssensoren 8.1, 8.2 sind in Längsrichtung der Aufnahme 23 zur Spulenvorrichtung 25 des Schwingungserregers 7 versetzt angeordnet. Des Weiteren sind die drei Spulenvorrichtungen 25 als Plattenspule ausgebildet und in den Seitenflächen versenkt angeordnet. An der Seitenfläche sind drei Spulenvorrichtungen 25 im Wesentlich gegenüber von den entsprechenden Magnetanordnungen 9.1, 9.2 angeordnet. In den beiden Seitenflächen ist jeweils eine Führung eingearbeitet, welche sich senkrecht zur Längsrichtung der Aufnahme 23 und parallel zur Spulenebene erstreckt. Gemäß der abgebildeten Ausgestaltung erstreckt sich die Aufnahme 23 über zwei Stirnseiten der Aufnahme 23. Dies ermöglicht ein Einführen des Messrohrmoduls 4 senkrecht zur Längsrichtung des Messrohrmodul 4. Gemäß einer weiteren Ausgestaltung erstreckt sich die Aufnahme 23 ausschließlich über eine Stirnseite des Trägermoduls 16. In dem Fall ist das Messrohrmodul 4 in Längsrichtung des Messrohrmoduls 4 - oder des Trägermodul 16 - in das Trägermodul 16 einzuführen.

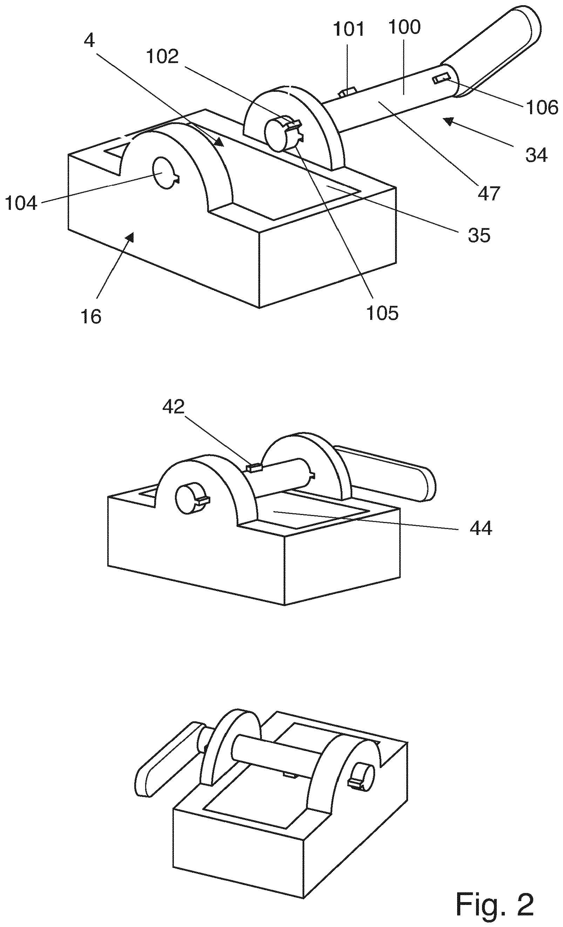

Die Fig. 2 zeigt in drei perspektivischen Ansichten das Fixieren eines Messrohrmoduls 4 in einer Aufnahme eines Trägermoduls 16 mittels einer erfindungsgemäßen Ausgestaltung der Fixiervorrichtung 34. Das Messrohrmodul 4 ist in der Aufnahme 23 des Trägermoduls angeordnet. Die Fixiervorrichtung 34 weist eine zumindest abschnittsweise exzentrisch ausgebildete Welle 100 auf, welche dazu eingerichtet ist, das Messrohrmodul 4 über die Fixierkörperanordnung 35 in der Aufnahme zu verspannen und mit dem Trägermodul 16 mechanisch lösbar zu verbinden. In dem abgebildeten Fall ist die Welle 100 der Fixiervorrichtung 34 als eine am Trägermodul 16 gelagerte Nockenwelle, mit einer Nocke 101 ausgebildet. Um die Befestigung des Messrohrmoduls 4 in der Aufnahme 23 anwendungsbedingt anzupassen, können auch mehr als die eine dargestellte Nocke 101 vorgesehen werden. Die Welle 100 ist in eine Längsrichtung der Welle 100 beweglich gelagert, so dass diese die Aufnahme beim Einführen des Messrohrmoduls 4 nicht versperrt (siehe erste Ansicht). Ein erster Vorsprung 102 an der Welle 100 verhindert ein Herausfallen ebendieser, wodurch ein bedienerfreundliches Montieren des Messrohrmoduls 4 ermöglicht wird. Der erste Vorsprung 102 ist nicht dazu vorgesehen das Messrohrmodul 4 in der Aufnahme 23 einzuspannen. Die Fixiervorrichtung 34 umfasst zudem ein erstes Drehlager 104 und ein zweites Drehlager 105 zum Führen der Welle 100 auf gewollte Freiheitsgrade. Die Welle 100 ist mechanisch lösbar und um die eigene Längsachse rotierbar mit dem ersten Drehlager 104 und dem zweiten Drehlager 105 verbindbar. Die Nocke 101 weist mindestens eine Fixierfläche 42 und die Fixierkörperanordnung 35 entsprechend mindestens eine Auflagefläche 44 auf. In einem eingebauten Zustand des Messrohrmoduls 4 in der Aufnahme des Trägermoduls 16 liegt die mindestens eine Fixierfläche 42 oder die genau eine Fixierfläche 42 der Nocke 101 auf der mindestens einen Auflagefläche 44 der Fixierkörperanordnung 35 auf, was dazu führt, dass eine kraft- und/oder formschlüssige Verbindung des Messrohrmoduls 4 mit dem Trägermodul erfolgt. Diese Verbindung wird durch ein Rotieren der Welle 100 um die eigene Längsachse erzeugt.

Die Welle 100 ist zudem derart ausgebildet, dass eine Bewegung ebendieser in eine Längsrichtung zumindest abschnittsweise ausschließlich in einer diskreten Anzahl an Orientierungen der Welle 100 möglich ist. In einem ersten Abschnitt ist die Welle 100 abschnittsweise in genau einer Orientierung durchführbar und in einem zweiten Abschnitt ist ein Hindurchführen der Welle 100 abschnittsweise ausschließlich in genau zwei Orientierungen möglich. In der abgebildeten Ausgestaltung wird das dadurch realisiert, dass die Welle 100 zusätzlich zu der Nocke 101 den ersten Vorsprung 102 und einen zweiten Vorsprung 106 aufweist. Der zweite Vorsprung 106 ist ebenfalls wie der erste Vorsprung nicht dazu eingerichtet die form- und/oder kraftschlüssige Verbindung zu bilden. Der erste Vorsprung 102 und der zweite Vorsprung 106 erstrecken sich jeweils ausgehende von der Welle 100 radial. Der erste Vorsprung 102 und der zweite Vorsprung 106 sind relativ zur Nocke 101 und zueinander in Längsrichtung der Welle 100 versetzt angeordnet. Der erste Vorsprung 102 und der zweite Vorsprung 106 sind derart an der Welle 100 angeordnet und beabstandet, dass zumindest nach dem Herausführen der Nocke 101 durch das zweite Drehlager 105 eine Bewegung der Welle 100 in Richtung der Längsachse blockiert ist, und bevorzugt ausschließlich in genau einer Orientierung der Welle 100 möglich ist. Dies wird durch gemäß der Ausgestaltung mittels eines Schlitzes realisiert. Alternativ kann die Welle und der erste Vorsprung 102 zweiteilig ausgebildet sein, d.h. der erste Vorsprung 102 ist als eine separates Bauteil in einer Aufnahme der Welle 100 anordenbar. Während der erste Vorsprung 102 dazu dient, ein Herausfallen der Welle 100 aus dem ersten Drehlager 104 während der Montage zu vermeiden, dient der zweite Vorsprung 106 im Wesentlichen dazu, die Bewegung der Welle 100 in ihr Längsrichtung zu begrenzen und somit die Nocke 101 in die vorgesehene Sollposition zu bringen (siehe zweite Ansicht). Der zweite Vorsprung 106 kann somit auch ringförmig oder zumindest nicht komplementär zur Öffnung des Lagers, durch welche die Welle 100 zu führen ist, ausgebildet werden. Die abgebildete Welle 100 weist an einem Ende einen Hebel auf zum einfacheren Bedienen der Fixiervorrichtung 34.

Ausgehend von der Orientierung der Welle 100 in der zweiten Ansicht führt ein Rotieren ebendieser, in dem Fall um 180° zur form- und/oder kraftschlüssigen Verbindung mit der Fixierkörperanordnung 35 des Messrohrmoduls 4 (siehe dritte Ansicht). Alternativ kann eine elektronische Vorrichtung vorgesehen werden, welche die Bewegung der Welle 100 in ihre Längsrichtung und das Drehen der Welle 100 um die Längsachse, beispielsweise durch einen Linear- und/oder Drehmotor bewirkt.

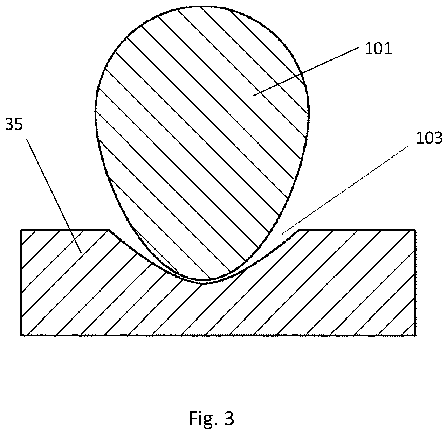

Die Fig. 3 zeigt einen Querschnitt durch eine Ausgestaltung der Nockenwelle und einer Fixierkörperanordnung 35 mit einer Vertiefung 103, die zumindest teilweise komplementär zur mindestens einen Nocke 101 bzw. zum exzentrischen Abschnitt der Welle ausgebildet ist. Die Vertiefung 103 ist dazu ausgebildet, mit der mindestens einen Nocke 101 bzw. dem exzentrischen Abschnitt eine zumindest formschlüssige Verbindung zu bilden und somit das Messrohrmodul über die Fixierkörperanordnung 35 in der Aufnahme zu verspannen. Die Auflagefläche erstreckt sich in der abgebildeten Ausgestaltung in der Vertiefung 103.

### Bezugszeichenliste

Koppleranordnung 1
Messgerät 2
Messrohr 3.1, 3.2
Messrohrmodul 4
Fixierkörperanordnung 5
Kopplerelement 6.1, 6.2
Schwingungserreger 7
Schwingungssensor 8.1, 8.2
Magnetanordnung 9.1, 9.2
Magnet 10.1, 10.2
Schenkel 11
Mess- und/oder Betriebsschaltung 15
Trägermodul 16
Aufnahme 23
Seitenfläche 24
Spulenvorrichtung 25
Montagefläche 26
Seitenfläche 27
Fixiervorrichtung 34
Fixierkörperanordnung 35
Fixierfläche 42
Auflagefläche 44
Welle 100
Nocke 101
erster Vorsprung 102
Vertiefung 103
erstes Drehlager 104
zweites Drehlager 105
zweiter Vorsprung 106

## Patentansprüche

1. Modulares Messgerät (2) zum Erfassen eines Massedurchflusses, einer Viskosität, einer Dichte und/oder einer davon abgeleiteten Größe eines fließfähigen Mediums, insbesondere ein modular ausgebildetes Coriolis-Durchflussmessgerät für bevorzugt pharmazeutische Bioprozessanwendungen, umfassend:
- ein, insbesondere als Einwegartikel ausgebildetes Messrohrmodul (4),
wobei das Messrohrmodul (4) mindestens ein, von einem Medium durchströmbares Messrohr (3.1, 3.2) umfasst,
wobei das Messrohrmodul (4) eine, an dem mindestens einen Messrohr (3) befestigte Fixierkörperanordnung (35) aufweist;
- einen Schwingungserreger (7), welcher dazu eingerichtet ist, das Messrohr (3) zu Schwingungen anzuregen, insbesondere umfassend einen Erregermagneten (36) und eine Erregerspule (37);
wobei zumindest eine Komponente des Schwingungserregers (7), insbesondere der Erregermagnet (36) an dem Messrohrmodul (4) angeordnet ist;
- mindestens einen Schwingungssensor (8.1, 8.2), welcher dazu eingerichtet ist, die Schwingungen des mindestens einen Messrohres (3.1, 3.2) zu erfassen, insbesondere umfassend einen Sensormagneten (38) und eine Sensorspule (39),
wobei zumindest eine Komponente des Schwingungssensors (8.1, 8.2), insbesondere der Sensormagnet (38) an dem Messrohrmodul (4) angebracht ist;
- ein Trägermodul (16), insbesondere umfassend eine Aufnahme (23), die Sensorspule (39) und die Erregerspule (37),
wobei das Messrohrmodul (4) in die Aufnahme (23) des Trägermoduls (16) anordenbar ist,
wobei das Trägermodul (16) eine Fixiervorrichtung (34) aufweist,
wobei die Fixiervorrichtung (34) eine zumindest abschnittsweise exzentrisch ausgebildete Welle (100) aufweist,
wobei die die Welle (100) dazu eingerichtet ist, das Messrohrmodul (4), über die Fixierkörperanordnung (35) in der Aufnahme (23) zu verspannen und mit dem Trägermodul (16) mechanisch lösbar zu verbinden,
**dadurch gekennzeichnet, dass** die Welle (100) als eine am Trägermodul (16) gelagerte Nockenwelle, mit mindestens einer Nocke (101) ausgebildet ist.

2. Modulares Messgerät (2) nach Anspruch 1,
wobei die Fixierkörperanordnung (35) eine Vertiefung (103) aufweist, die zumindest teilweise komplementär zum exzentrischen Abschnitt der Welle (100), insbesondere zur mindestens einen Nocke (101) ausgebildet ist,
wobei die Vertiefung dazu ausgebildet ist, mit dem exzentrischen Abschnitt der Welle (100), insbesondere mit der mindestens einen Nocke (101) eine zumindest formschlüssige Verbindung zu bilden.

3. Modulares Messgerät (2) nach mindestens einem der vorhergehenden Ansprüche,
wobei die Fixierkörperanordnung (35), insbesondere die Welle (100) und bevorzugt die Nockenwelle in eine Längsrichtung beweglich gelagert ist.

4. Modulares Messgerät (2) nach Anspruch 3,
wobei die Fixiervorrichtung (34), insbesondere die Welle (100) derart ausgebildet ist, dass eine Bewegung in Längsrichtung zumindest abschnittsweise ausschließlich in einer diskreten Anzahl an Orientierungen, insbesondere in genau einer Orientierung und vorzugsweise in genau zwei Orientierung der Fixiervorrichtung (34), insbesondere der Welle (100) und bevorzugt der Nockenwelle möglich ist.

## Claims

1. Modular measuring device (2) for measuring a mass flow, a viscosity, a density and/or a variable derived therefrom of a flowable medium, in particular a modular Coriolis flowmeter for preferably pharmaceutical bioprocess applications, comprising:
- a measuring tube module (4) designed in particular as a disposable article,
the measuring tube module (4) comprising at least one measuring tube (3.1, 3.2) through which a medium can flow,
the measuring tube module (4) having a fixing body arrangement (35) attached to the at least one measuring tube (3);
a vibration exciter (7) which is set up to excite the measuring tube (3) to vibrate, in particular comprising an exciter magnet (36) and an exciter coil (37);
at least one component of the vibration exciter (7), in particular the exciter magnet (36), being arranged on the measuring tube module (4);
at least one vibration sensor (8.1, 8.2) which is set up to detect the vibrations of the at least one measuring tube (3.1, 3.2), in particular comprising a sensor magnet (38) and a sensor coil (39),
wherein at least one component of the vibration sensor (8.1, 8.2), in particular the sensor magnet (38), is attached to the measuring tube module (4);
- a carrier module (16), in particular comprising a receptacle (23), the sensor coil (39) and the exciter coil (37),
wherein the measuring tube module (4) can be arranged in the receiver (23) of the carrier module (16),
the carrier module (16) having a fixing device (34),
the fixing device (34) having a shaft (100) which is designed to be eccentric at least in sections, the shaft (100) being set up to clamp the measuring tube module (4) in the receptacle (23) by means of the fixing body arrangement (35) and to connect it mechanically releasably to the carrier module (16),
**characterized in that** the shaft (100) is designed as a camshaft, which is mounted on the carrier module (16) and has at least one cam (101).

2. Modular measuring instrument (2) according to claim 1,
wherein the fixing body arrangement (35) has a recess (103) which is at least partially complementary to the eccentric portion of the shaft (100), in particular to the at least one cam (101),
wherein the recess is configured to form an at least form-fitting connection with the eccentric portion of the shaft (100), in particular with the at least one cam (101).

3. Modular measuring instrument (2) according to at least one of the preceding claims,
wherein the fixing body arrangement (35), in particular the shaft (100) and preferably the camshaft, is mounted so as to be movable in a longitudinal direction.

4. Modular measuring instrument (2) according to claim 3,
wherein the fixing device (34), in particular the shaft (100), is designed such that a movement in the longitudinal direction is possible at least in sections exclusively in a discrete number of orientations, in particular in precisely one orientation and preferably in precisely two orientations of the fixing device (34), in particular of the shaft (100) and preferably of the camshaft.

## Revendications

1. Appareil de mesure modulaire (2) pour la détection d'un débit massique, d'une viscosité, d'une densité et/ou d'une grandeur dérivée de ceux-ci d'un milieu fluide, en particulier un débitmètre à effet Coriolis de conception modulaire pour des applications de bioprocédés de préférence pharmaceutiques, comprenant :
- un module de tube de mesure (4), en particulier conçu comme un article jetable,
où le module de tube de mesure (4) comprend au moins un tube de mesure (3.1, 3.2) pouvant être traversé par un fluide,
où le module de tube de mesure (4) présente un dispositif de fixation (35) fixé à au moins un tube de mesure (3);
- un générateur d'oscillations (7) qui est conçu pour faire osciller le tube de mesure (3), comprenant en particulier un aimant excitateur (36) et une bobine excitatrice (37) ;
au moins un composant du générateur d'oscillations (7), en particulier l'aimant excitateur (36), étant disposé sur le module de tube de mesure (4) ;
- au moins un capteur de vibrations (8.1, 8.2) qui est conçu pour détecter les vibrations d'au moins un tube de mesure (3.1, 3.2), comprenant en particulier un aimant de capteur (38) et une bobine de capteur (39),
au moins un composant du capteur de vibrations (8.1, 8.2), en particulier l'aimant du capteur (38), étant fixé au module de tube de mesure (4) ;
- un module support (16), comprenant en particulier un logement (23), la bobine du capteur (39) et la bobine d'excitation (37),
le module de tube de mesure (4) pouvant être placé dans le logement (23) du module support (16),
le module support (16) comportant un dispositif de fixation (34),
le dispositif de fixation (34) comportant un arbre (100) excentré au moins par sections,
l'arbre (100) étant conçu pour serrer le module de tube de mesure (4) dans le logement (23) par l'intermédiaire du dispositif de fixation (35) et pour le relier de manière amovible au module de support (16),
**caractérisé en ce que** l'arbre (100) est conçu comme un arbre à cames monté sur le module support (16), avec au moins une came (101).

2. Appareil de mesure modulaire (2) selon la revendication 1,
où le dispositif de fixation (35) présente un creux (103) qui est au moins partiellement complémentaire à la partie excentrique de l'arbre (100), en particulier à la came (101) au nombre d'au moins une,
le creux étant conçu pour former une liaison au moins par complémentarité de forme avec la partie excentrique de l'arbre (100), en particulier avec la ou les cames (101).

3. Appareil de mesure modulaire (2) selon au moins l'une des revendications précédentes,
où le dispositif de fixation (35), en particulier l'arbre (100) et de préférence l'arbre à cames, est monté de manière mobile dans une direction longitudinale.

4. Appareil de mesure modulaire (2) selon la revendication 3,
le dispositif de fixation (34), en particulier l'arbre (100), étant conçu de telle sorte qu'un mouvement dans le sens longitudinal est possible, au moins par sections, exclusivement dans un nombre discret d'orientations, en particulier dans exactement une orientation et de préférence dans exactement deux orientations du dispositif de fixation (34), en particulier de l'arbre (100) et de préférence de l'arbre à cames.
